# EUROPÄISCHE PATENTSCHRIFT

(11) **EP 2 648 948 B1**
(45) Veröffentlichungstag und Bekanntmachung des Hinweises auf die Patenterteilung: **10.12.2014**
(21) Anmeldenummer: 11769889.4
(22) Anmeldetag: 14.10.2011
(51) Int. Cl.: B60T 7/12, B60T 13/74

(54) **VERFAHREN ZUM LÖSEN EINER FESTSTELLBREMSE BEI EINEM ANFAHRVORGANG**
METHOD FOR RELEASING A PARKING BRAKE DURING A STARTING PROCESS
PROCÉDÉ DE RELÂCHEMENT D'UN FREIN DE STATIONNEMENT LORS D'UN PROCESSUS DE DÉMARRAGE

(30) Priorität: 07.12.2010 DE 102010062498
(43) Veröffentlichungstag der Anmeldung: 16.10.2013
(73) Patentinhaber: Robert Bosch GmbH, 70442 Stuttgart (DE)
(72) Erfinder: FEINAUER, Jochen, 74613 Oehringen (DE); OLIVEIRA, Raphael, 71522 Backnang (DE)
(86) Internationale Anmeldenummer: PCT/EP2011/067998
(87) Internationale Veröffentlichungsnummer: WO 2012/076222

(56) Entgegenhaltungen:
- EP-A1- 1 327 566
- WO-A1-2004/106131
- DE-A1-102005 011 032
- DE-A1-102008 031 539
- FR-A1- 2 841 199
- FR-A1- 2 918 472

## Beschreibung

### Stand der Technik

Die Erfindung betrifft ein Verfahren zum automatischen Lösen einer Feststellbremse bei einem Anfahrvorgang eines Fahrzeuges gemäß dem Oberbegriff des Patentanspruchs 1.

In der WO 2004/106131 A1 wird bei einem Verfahren bzw. System zur Steuerung eines mit einer elektrischen Parkbremse ausgestatteten Bremssystems für ein Kraftfahrzeug , bei denen die elektrische Parkbremse in Reaktion auf eine Erkennung eines Anfahrvorgangs gelöst wird, ein Lösezeitpunkt der elektrischen Parkbremse in Abhängigkeit mindestens eines gemessenen Parameters eines Einkuppelvorgangs festgelegt. Im Vergleich zu einem Verfahren bzw. System, bei denen die elektrische Parkbremse beispielsweise in Abhängigkeit einer Gaspedalbetätigung durch den Fahrer gelöst wird, ermöglicht das Verfahren bzw. System insbesondere bei einem mit einem Schaltgetriebe ausgestatteten Fahrzeug eine genauere Abstimmung der Deaktivierung der elektrischen Parkbremse auf den Einkuppelvorgang und damit auf den Anfahrvorgang des Fahrzeugs.

Moderne Fahrzeuge sind oftmals mit Bremsfunktionen ausgestattet, die das Fahrzeug automatisch im Stillstand halten, ohne dass der Fahrer hierzu das Bremspedal betätigen muss. Aus dem Stand der Technik bekannte Bremsfunktionen sind zum Beispiel AVH (Automatic Vehicle Hold) oder ACC (Adaptive Cruise Control). Bei der Funktion AVH wird der vom Fahrer über das Bremspedal erzeugte Bremsdruck durch Schließen eines Ventils an den Radbremsen eingesperrt und somit das Fahrzeug automatisch im Stillstand gehalten. Wenn die Haltedauer eine vorgegebene Zeit überschreitet, wird in der Regel eine automatische Feststellbremse aktiviert, um das Fahrzeug energielos zu halten. Bei der Funktion ACC wird - sofern eine bestimmte Verkehrssituation gegeben ist - das Fahrzeug automatisch bis in den Stillstand verzögert und danach mittels der Betriebsbremse gehalten.

Die Betriebsbremse bzw. Feststellbremse (im Folgenden "Bremse") wird in der Regel automatisch gelöst, wenn der Fahrer losfahren möchte und das Fahrpedal sowie ggf. die Kupplung entsprechend betätigt. Sobald das Motormoment einen bestimmten Schwellenwert übersteigt, wird die Bremse gelöst. Der Schwellenwert entspricht dabei etwa demjenigen Motormoment, das erforderlich ist, um anzufahren. Das Lösen der Bremse kann je nach Bremsentyp z. B. das Öffnen eines Ventils oder das Betätigen eines Aktuators einer Feststellbremse umfassen.

Aufgrund der mechanischen Trägheit der bekannten Bremssysteme benötigt das Lösen der Bremsen eine gewisse Zeit. Der gelöste Zustand, in dem die Bremsen keine Kraft mehr ausüben, wird erst nach einer gewissen Verzögerungszeit erreicht. So benötigen beispielweise die Aktuatoren einer automatischen Feststellbremse etwa 500ms bis 700ms, um die Bremsbacken vollständig frei zu geben. Wenn der Fahrer nun besonders schnell anfahren möchte und das Fahrpedal entsprechend stark durchdrückt, führt die vorstehend beschriebene Verzögerungszeit dazu, dass das Fahrzeug gegen die Bremse anfährt. Dadurch ergibt sich eine geringere Beschleunigung des Fahrzeugs und ein relativ hoher Verschleiß der Bremsen.

Es ist somit die Aufgabe der vorliegenden Erfindung, ein Verfahren zum automatischen Lösen einer Bremse bei einem Anfahrvorgang zu schaffen, mit dem ein Anfahren gegen die Bremse verhindert wird.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, bei einem Anfahrvorgang eines Fahrzeuges, ein zukünftig zu erwartendes Motormoment oder eine dazu proportionale Größe (im Folgenden "zukünftiges Motormoment") zu schätzen und zu ermitteln, wann das zukünftige Motormoment einen vorgegebenen Schwellenwert überschreitet, und den Lösevorgang der Bremse so zeitig zu starten, dass der Vorgang in etwa beendet ist, wenn das geschätzte Motormoment den Schwellenwert überschreitet. Dies hat den Vorteil, dass das Fahrzeug, unabhängig davon, wie stark der Fahrer beschleunigen möchte, nicht mehr gegen die Bremse anfährt.

Der genannte Schwellenwert entspricht vorzugsweise etwa demjenigen Motormoment, das erforderlich ist, um in eine gewünschte Richtung anzufahren.

Der Beginn des Lösevorgangs ist vorzugsweise an die Trägheit des Bremssystems angepasst und kann im Falle einer automatischen Parkbremse beispielsweise mehrere hundert ms vor dem Zeitpunkt liegen, an dem das zukünftige Motormoment den Schwellenwert überschreitet.

Um das zukünftige Motormoment abzuschätzen, wird vorzugsweise eine Information über den Beschleunigungswunsch des Fahrers oder eine Beschleunigungsanforderung eines automatischen Assistenzsystems ausgewertet. So kann das zukünftige Motormoment beispielsweise anhand des Gradienten ermittelt werden, mit dem der Fahrer das Fahrpedal betätigt. Im Falle einer Beschleunigungsanforderung seitens eines automatischen Assistenzsystems kann auch ein entsprechender Sollwert des Assistenzsystems ausgewertet werden. Eine weitere Möglichkeit zur Bestimmung des zukünftigen Motormoments besteht darin, den bisherigen Verlauf des Motormoments zu extrapolieren.

Das erfindungsgemäße Verfahren kann auch basierend auf einer anderen, zum Motormoment proportionalen Größe, wie zum Beispiel der Stellung der Drosselklappe oder dem Massenluftstrom in einem Ansaugtrakt des Verbrennungsmotors, ausgeführt werden. In diesem Fall kann z. B. die zukünftige Drosselklappenstellung ermittelt und der Lösevorgang eine bestimmte Zeitspanne vor dem Moment gestartet werden, an dem die zukünftige Drosselklappenstellung den zugehörigen Schwellenwert überschreitet.

Zur Ausführung des erfindungsgemäßen Verfahrens ist vorzugsweise ein Algorithmus vorgesehen, der zum Beispiel in einem Steuergerät implementiert sein kann. Das Steuergerät kann die benötigten Informationen über das Motormoment auch von einem anderen Steuergerät erhalten, in dem diese Daten vorliegen.

Die Erfindung wird nachstehend anhand der beigefügten Zeichnungen beispielhaft näher erläutert. Es zeigen:
Fig. 1 den Verlauf des Motormoments eines Verbrennungsmotors bei einem Anfahrvorgang; und
Fig. 2 die wesentlichen Verfahrensschritte eines Verfahrens zum Lösen einer Bremse bei einem Anfahrvorgang eines Fahrzeugs.

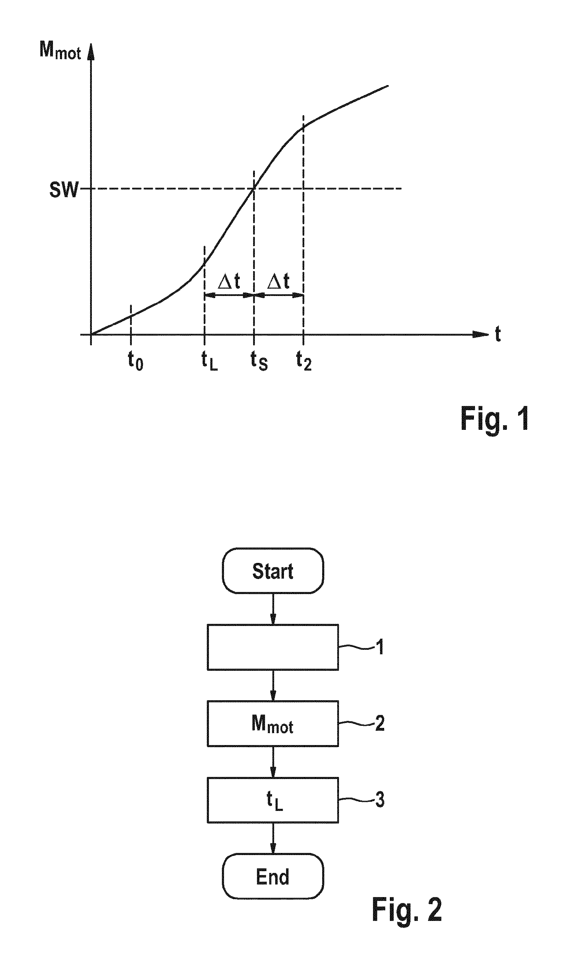

Figur 1 zeigt den Verlauf eines Motormoments Mmot eines Verbrennungsmotors bei einem Anfahrvorgang eines Fahrzeuges. Das Motormoment übersteigt in einem Zeitpunkt t_{S} einen vorgegebenen Schwellenwert SW. Bei diesem Wert ist das Motomoment etwa so groß, dass das Fahrzeug anfährt, ohne zurück zu rollen. Der Schwellenwert kann z. B. unter Berücksichtigung der Fahrbahnsteigung, der Fahrzeugmasse oder anderer relevanter Größen ermittelt werden.

Im vorliegenden Beispiel wird angenommen, dass das Fahrzeug ein spezielles Bremssystem enthält, bei dem die Radbremsen oder eine Feststellbremse automatisch gelöst werden, wenn der Fahrer anfahren möchte.

Derartige, aus dem Stand der Technik bekannte Bremssysteme überwachen das Motormoment Mmot zum Beispiel über die Position der Drosselklappe oder über den Massenluftstrom in einem Ansaugtrakt des Verbrennungsmotors. Wenn das Motormoment Mmot den Schwellenwert SW überschreitet, wird der Lösevorgang gestartet. Aufgrund der Trägheit der bekannten Bremssysteme dauert es nach dem Initiieren des Lösevorgangs noch eine Zeitspanne Δt, bis sich die Bremse tatsächlich gelöst hat. Die Bremse ist daher erst im Zeitpunkt t₂ vollständig gelöst. In der Zwischenzeit fährt das Fahrzeug gegen die Bremse an. Im Falle einer automatischen Feststellbremse kann die Zeitspanne Δt mehrere hundert ms betragen.

Um ein Anfahren gegen die Bremse zu vermeiden, ist bei dem hier dargestellten Ausführungsbeispiel der Erfindung vorgesehen, den Lösevorgang bereits eine Zeitspanne Δt vor dem Zeitpunkt t_{S} zu starten. Wenn die Zeitspanne Δt der Trägheit des Bremssystems entspricht, ist die Bremse genau im Zeitpunkt t_{S} vollständig gelöst, also genau dann, wenn das Fahrzeug anzufahren beginnt. Der Zeitpunkt, an dem der Lösevorgang gestartet wird, ist mit t_{L} gekennzeichnet. Der aktuelle Zeitpunkt ist t₀.

Um die Bremse rechtzeitig lösen zu können, müssen der zukünftige Verlauf des Motormoments Mmot und der Zeitpunkt t_{S} abgeschätzt werden. Das zukünftige Motormoment kann z. B. aus der zeitlichen Änderung der Drosselklappenstellung oder des Massenluftstroms in einem Ansaugtrakt des Verbrennungsmotors geschätzt werden. Alternativ könnte der zukünftige Verlauf des Motormoments auch aus dem bisherigen Verlauf extrapoliert werden. Zum Messen des Motormoments ist eine entsprechende, aus dem Stand der Technik bekannte Sensorik vorgesehen. Diese Sensorik kann beispielsweise einen Luftmassenmesser, einen Sensor zum Messen der Drosselklappenstellung und/oder einen Fahrpedalsensor umfassen.

Aus der Schätzung ergibt sich, welches Motormoment z. B. in 300ms oder 500ms (oder einer anderen Zeit) voraussichtlich vorliegt. Der Lösevorgang kann somit rechtzeitig gestartet werden, bevor das geschätzte Motormoment Mmot den Schwellenwert SW überschreitet.

Figur 2 zeigt die wesentlichen Verfahrensschritte eines Verfahrens zum Lösen einer Bremse bei einem Anfahrvorgang eines Fahrzeugs. Dabei wird in Schritt 1 zunächst der Beschleunigungswunsch des Fahrers oder eine Soll-Anforderung eines automatischen Fahr-Assistenzsystems ausgewertet. Im letzteren Fall kann beispielsweise ein Soll-Moment eines ACC-Steuergeräts ausgewertet werden. In Schritt 2 wird basierend darauf ein zukünftiges Motormoment berechnet, das voraussichtlich in x Millisekunden vorliegen wird. Die Zahl x kann beispielsweise 300, 500 oder eine andere Zahl sein. In Schritt 3 wird schließlich abgefragt, ob das geschätzte Motormoment den Schwellenwert SW überschreitet. Wenn das geschätzte Motormoment den Schwellenwert SW überschreitet, wird der Bremsen-Lösevorgang initiiert und die Bremse gelöst.

## Patentansprüche

1. Verfahren zum Lösen einer Bremse bei einem Anfahrvorgang eines Fahrzeuges, **gekennzeichnet durch** folgende Schritte:
- Abschätzen (1) eines zukünftigen Motormoments (Mmot) oder einer dazu proportionalen Größe,
- Ermitteln (2), wann das zukünftige Motormoment (Mmot) oder die dazu proportionale Größe einen vorgegebenen Schwellenwert (SW) überschreitet, und
- Starten (3) des Lösevorgangs der Bremse eine vorgegebene Zeitspanne (Δt) vor dem Zeitpunkt (t_{S}), an dem der Schwellenwert (SW) überschritten wird.

2. Verfahren nach Anspruch 1, **dadurch gekennzeichnet, dass** das zukünftige Motormoment (Mmot) oder die proportionale Größe aus einer Information über den Beschleunigungswunsch des Fahrers oder basierend auf einem Sollwert eines automatischen Assistenzsystems geschätzt wird.

3. Verfahren nach Anspruch 1 oder 2, **dadurch gekennzeichnet, dass** das zukünftige Motormoment (Mmot) oder die proportionale Größe aus der bisherigen Dynamik der Fahrpedalbetätigung geschätzt wird.

4. Verfahren nach einem der vorhergehenden Ansprüche, **dadurch gekennzeichnet, dass** die Zeitspanne (Δt) in etwa derjenigen Zeit entspricht, die die Bremse zum vollständigen Lösen braucht.

5. Verfahren nach einem der vorhergehenden Ansprüche **dadurch gekennzeichnet, dass** das in einer vorgegeben Zeitspanne vorliegende, zukünftige Motormoment (Mmot) geschätzt und die Bremse automatisch gelöst wird, wenn das zukünftige Motormoment (Mmot) oder die dazu proportionale Größe den Schwellenwert (SW) überschreitet.

6. Steuergerät, in dem der Algorithmus zum Durchführen eines der vorstehend beanspruchten Verfahren implementiert ist.

## Claims

1. Method for releasing a brake during a starting process of a vehicle, **characterized by** the following steps:
- estimating (1) a future engine torque (Mmot) or a variable which is proportional thereto,
- determining (2) when the future engine torque (Mmot) or the variable which is proportional thereto exceeds a predefined threshold value (SW), and
- starting (3) the process of releasing the brake a predefined time period (Δt) before the time (t_{S}) at which the threshold value (SW) is exceeded.

2. Method according to Claim 1, **characterized in that** the future engine torque (Mmot) or the proportional variable is estimated from information about the acceleration request of the driver or on the basis of a setpoint value of an automatic assistance system.

3. Method according to Claim 1 or 2, **characterized in that** the future engine torque (Mmot) or the proportional variable is estimated from the previous dynamics of the activation of the accelerator pedal.

4. Method according to one of the preceding claims, **characterized in that** the time period (Δt) corresponds approximately to the time which the brake takes for complete release.

5. Method according to one of the preceding claims, **characterized in that** the future engine torque (Mmot) which is present in a predefined time period is estimated and the brake is automatically released if the future engine torque (Mmot) or the variable which is proportional thereto exceeds the threshold value (SW).

6. Control unit in which the algorithm for carrying out one of the methods claimed above is implemented.

## Revendications

1. Procédé pour relâcher un frein lors d'une opération de démarrage d'un véhicule, **caractérisé par** les étapes suivantes :
- évaluer (1) un couple moteur futur (Mmot) ou une grandeur proportionnelle à celui-ci,
- déterminer (2) quand le couple moteur futur (Mmot) ou la grandeur proportionnelle à celui-ci aura dépassé une valeur seuil prédéfinie (SW), et
- démarrer (3) l'opération de relâchement du frein à une période prédéfinie (Δt) avant l'instant (t_{S}) auquel la valeur seuil (SW) sera dépassée.

2. Procédé selon la revendication 1, **caractérisé en ce que** le couple moteur futur (Mmot) ou la valeur proportionnelle est évalué(e) à partir d'une information concernant le souhait d'accélération du conducteur ou sur la base d'une valeur de consigne d'un système d'assistance automatique.

3. Procédé selon la revendication 1 ou 2, **caractérisé en ce que** le couple moteur futur (Mmot) ou la grandeur proportionnelle est évalué(e) à partir de la dynamique antérieure de l'actionnement de la pédale d'accélérateur.

4. Procédé selon l'une quelconque des revendications précédentes, **caractérisé en ce que** la période prédéfinie (Δt) correspond approximativement au temps nécessaire pour relâcher complètement le frein.

5. Procédé selon l'une quelconque des revendications précédentes, **caractérisé en ce que** le couple moteur futur (Mmot) se présentant dans une période prédéfinie est évalué et le frein est automatiquement relâché lorsque le couple moteur futur (Mmot) ou la grandeur proportionnelle à celui-ci dépasse la valeur seuil (SW).

6. Appareil de commande dans lequel est exécuté l'algorithme pour mettre en oeuvre l'un des procédés revendiqués précédemment.
